# EUROPÄISCHE PATENTSCHRIFT

(11) **EP 1 840 014 B1**
(45) Veröffentlichungstag und Bekanntmachung des Hinweises auf die Patenterteilung: **18.02.2009**
(21) Anmeldenummer: 07003704.9
(22) Anmeldetag: 23.02.2007
(51) Int. Cl.: B62D 35/00

(54) **Luftleitvorrichtung für ein Fahrzeug**
Aerodynamic spoiler for a vehicle
Déflecteur aérodynamique d'air pour un véhicule

(30) Priorität: 28.03.2006 DE 102006014261
(43) Veröffentlichungstag der Anmeldung: 03.10.2007
(73) Patentinhaber: Dr. Ing. h.c. F. Porsche Aktiengesellschaft, 70435 Stuttgart (DE)
(72) Erfinder: Fröschle, Mathias, 73760 Ostfildern (DE); Paul, Joachim, 70563 Stuttgart (DE)

(56) Entgegenhaltungen:
- EP-A- 1 738 996
- EP-A1- 0 429 776
- EP-A2- 1 118 529
- EP-A2- 1 138 582
- WO-A-97/32770
- DE-A1-1102004 030 57

## Beschreibung

Die Erfindung betrifft eine Luftleitvorrichtung für ein Fahrzeug nach dem Oberbegriff des Patentanspruchs 1.

Eine solche Luftleitvorrichtung für ein Fahrzeug ist aus der DE 10 2004 030 571 A1 bekannt. Sie ist in einem Heckbereich des Fahrzeugs angeordnet und umfasst mindestens ein mittleres Hauptluftleitelement, das von einer eingefahrenen Ruhestellung in eine ausgefahrene Betriebsstellung verlagerbar ist. Seitliche Zusatzluftleitelemente sind zusammen mit dem Hauptluftleitelement verlagerbar und gegenüber dem Hauptluftleitelement im wesentlichen linear bzw. translatorisch in einer Richtung quer zur Längsrichtung des Fahrzeugs verstellbar, um dieselben von einer ebenfalls eingefahrenen Ruhestellung in eine ebenfalls ausgefahrene Betriebsstellung zu überführen. Jedes Zusatzluftleitelement ist in einer Führungseinrichtung geführt und entlang derselben verfahrbar. Die Zusatzluftleitelemente sind zeitgleich bzw. simultan mit der Verlagerung des Hauptluftleitelements von der ebenfalls eingefahrenen Ruhestellung in die ebenfalls ausgefahrene Betriebsstellung überführbar.

Aus der DE 30 19 150 A1 ist eine Luftleitvorrichtung für ein Fahrzeug bekannt, die in einem oben liegenden Heckbereich des Fahrzeugs angeordnet ist und ein Luftleitelement umfasst, welches von einer Ruhestellung, in der es oberflächenbündig in den Formverlauf des Heckbereichs integriert ist, in eine ausgefahrene Betriebsstellung verlagerbar ist. Das Luftleitelement ist als Tragflügel ausgebildet, der mittels einer Betätigungseinrichtung von der Ruhestellung in die Betriebsstellung und umgekehrt verlagerbar bzw. überführbar ist.

Die DE 43 05 090 A1 offenbart ebenfalls eine Luftleitvorrichtung für ein Fahrzeug, die in einem Heckbereich des Fahrzeugs angeordnet ist und ein Luftleitelement umfasst, welches von einer Ruhestellung in eine ausgefahrene Betriebsstellung verlagerbar ist. Das Luftleitelement wird durch einen Heckspoiler gebildet, der in einer versenkten Aufnahme der Fahrzeugkarosserie angeordnet und mittels einer Betätigungseinrichtung von der Ruhestellung in die Betriebsstellung und umgekehrt verlagerbar ist.

Mit den aus der DE 30 19 150 A1 und aus der DE 43 05 090 A1 bekannten Luftleitvorrichtungen kann der Hinterachsabtriebsbeiwert (cₐₕ-Wert) des Kraftfahrzeugs bei gleichbleibendem oder auch verbessertem Luftwiederstandsbeiwert (c_{w}-Wert) erhöht werden, wobei diese bekannten Luftleitelemente in der Ruhestellung und in der Betriebsstellung jeweils dieselbe Quererstreckung aufweisen.

Die nachveröffentlichte EP1 738 996 A2 offenbart eine Luftleitvorrichtung für ein Fahrzeug, die ein mittleres Hauptluftleitelement sowie zwei seitliche Zusatzluftleitelemente umfasst, wobei mit Hilfe der Zusatzluftleitelemente die Quererstreckung der Luftleitvorrichtung in der Betriebsstellung vergrößert werden und insbesondere der Hinterachsabtriebsbeiwert weiter erhöht werden kann. Nach der EP 1 738 996 A2 erfolgt die Verstellbewegung der seitlichen Zusatzluftleitelemente gegenüber dem mittleren Hauptluftleitelement dann, wenn das Hauptluftleitelement von der Ruhestellung in die Betriebsstellung verlagert wurde. Die Verstellung der Zusatzluftleitelemente gegenüber dem Hauptluftleitelement erfolgt demnach zeitlich nach bzw. entkoppelt von der Verlagerung des Hauptluftleitelements.

Hiervon ausgehend liegt der vorliegenden Erfindung das Problem zu Grunde, eine neuartige Luftleitvorrichtung für ein Fahrzeug zu schaffen, die auf einfache Art und Weise eine Anpassung ihrer Quererstreckung ermöglicht.

Dieses Problem wird dadurch gelöst, dass die eingangs genannte Luftleitvorrichtung durch die Merkmale des kennzeichnenden Teils des Patentanspruchs 1 weitergebildet ist.

Die Zusatzluftleitelemente sind gegenüber dem oder jedem Hauptluftleitelement im wesentlichen linear bzw. translatorisch in einer Richtung quer zur Längsrichtung des Fahrzeugs verstellbar, um dieselben von einer ebenfalls eingefahrenen Ruhestellung in eine ebenfalls ausgefahrene Betriebsstellung zu überführen, wobei jedes Zusatzluftleitelement in einer Führungseinrichtung geführt und entlang derselben verfahrbar ist. Dabei ist die Verstellung der seitlichen Zusatzluftleitelemente an die Verlagerung des oder jedes mittleren Hauptluftleitelements bei der Überführung desselben bzw. derselben von der Ruhestellung in die Betriebsstellung und umgekehrt derart gekoppelt, dass die seitlichen Zusatzluftleitelemente zeitgleich bzw. simultan mit der Verlagerung des oder jedes mittleren Hauptluftleitelements gegenüber dem oder jedem mittleren Hauptluftleitelement von der Ruhestellung in die Betriebsstellung bzw. von der Betriebsstellung in die Ruhestellung überführt werden können.

Erfindungsgemäß greift hierzu an der Betätigungseinrichtung eine Kopplungseinrichtung an, welche die lineare Verstellung der seitlichen Zusatzluftleitelemente gegenüber dem mittleren Hauptluftleitelement an die Verlagerung des mittleren Hauptluftleitelements mechanisch koppelt.

Hierbei werden die seitlichen Zusatzluftleitelemente gegenüber dem oder jedem mittleren Hauptluftleitelement ausschließlich linear bzw. translatorisch quer zur Längsrichtung des Fahrzeugs verstellt. Innerhalb kürzester Zeit sowie auf einfache Art und Weise kann hierdurch die Quererstreckung der erfindungsgemäßen Luftleitvorrichtung angepasst werden. Jedem Zusatzluftleitelement ist zur linearen Verschiebung desselben gegenüber dem oder jedem Hauptluftleitelement eine Betätigungseinrichtung zugeordnet, wobei an der jeweiligen Betätigungseinrichtung eine Kopplungseinrichtung angreift, welche die lineare Verstellung des oder jedes Zusatzluftleitelements gegenüber dem oder jedem Hauptluftleitelement an die Verlagerung des oder jedes Hauptluftleitelements koppelt.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: einen Heckbereich eines Fahrzeugs mit einer erfindungsgemäßen Luftleitvorrichtung in Ruhestellung in einer perspektivischen Ansicht von schräg hinten;
- Fig. 2: den Heckbereich der Fig. 1 mit der Luftleitvorrichtung in Betriebsstellung in einer Ansicht analog Fig. 1;
- Fig.3: einen Ausschnitt aus der erfindungsgemäßen Luftleitvorrichtung in Ruhestellung in schematisierter Draufsicht;
- Fig. 4: einen Ausschnitt aus der erfindungsgemäßen Luftleitvorrichtung in Betriebsstellung in einer Ansicht analog Fig. 3;
- Fig.5: einen Ausschnitt aus der erfindungsgemäßen Luftleitvorrichtung in Ruhestellung in schematisierter, perspektivischer Ansicht von schräg hinten; und
- Fig. 6: einen Ausschnitt aus der erfindungsgemäßen Luftleitvorrichtung in Betriebsstellung in einer Ansicht analog Fig. 5.

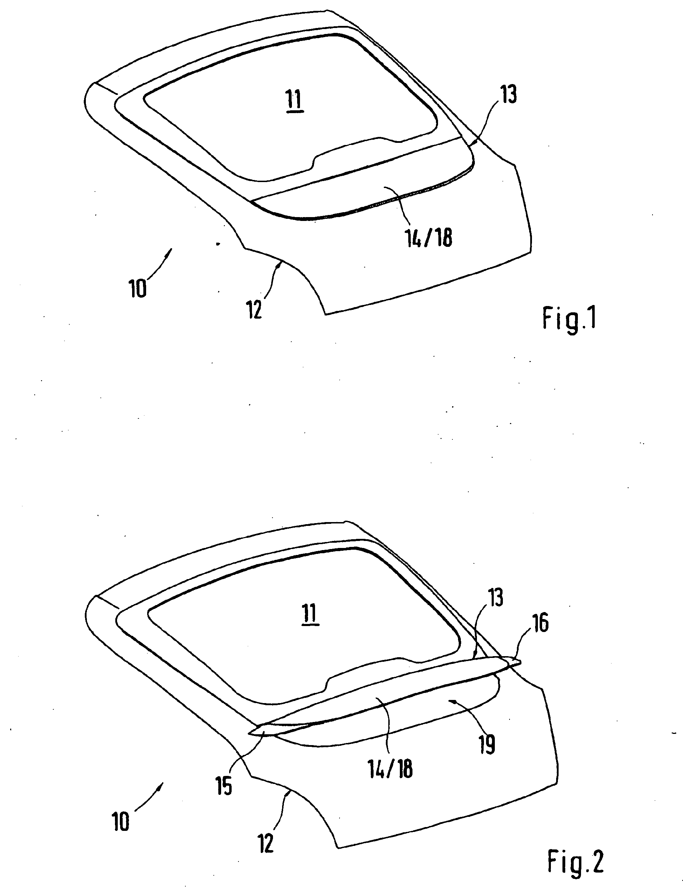

Fig. 1 und 2 zeigen eine perspektivische Ansicht eines Heckbereichs 10 eines Fahrzeugaufbaus, wobei der Heckbereich 10 eine Heckscheibe 11 umfasst, die vorne, hinten sowie seitlich von einem Karosserieteil 12 umschlossen ist. In einem hinteren Bereich des Karosserieteils 12 des fließheckartig ausgebildeten Heckbereichs 10 und demnach unterhalb des Heckfensters 11 ist eine Luftleitvorrichtung 13 positioniert, wobei in Fig. 1 die Luftleitvorrichtung 13 in einer Ruhestellung und in Fig. 2 dieselbe in einer Betriebsstellung gezeigt ist. In der Ruhestellung der Luftleitvorrichtung 13 (siehe Fig. 1) ist dieselbe oberflächenbündig in den Heckbereich 10 des Fahrzeugs integriert. In der Betriebsstellung der Luftleitvorrichtung 13 (siehe Fig. 2) hingegen ist dieselbe aus der Oberflächenkontur des Heckbereichs 10 heraus bewegt.

Die erfindungsgemäße Luftleitvorrichtung 13 verfügt im gezeigten Ausführungsbeispiel über ein mittleres Hauptluftleitelement 14 sowie zwei seitliche Zusatzluftleitelemente 15 und 16, wobei die seitlichen Zusatzluftleitelemente 15, 16 lediglich in der Betriebsstellung (siehe Fig. 2) der Luftleitvorrichtung 13 sichtbar sind.

In der Ruhestellung sind die seitlichen Zusatzluftleitelemente 15, 16 vom mittleren Hauptluftleitelement 14 verdeckt. Zu jeder Seite des mittleren Hauptluftleitelements 14 ist eines der seitlichen Zusatzluftleitelemente 15 bzw. 16 angeordnet.

Das mittlere Hauptluftleitelement 14 wird bei der Überführung bzw. Verlagerung von der Ruhestellung in die Betriebsstellung bzw. von der Betriebsstellung in die Ruhestellung verschwenkt und dabei angehoben bzw. abgesenkt, wobei die beiden seitlichen Zusatzluftleitelemente 15, 16 diese Bewegung des mittleren Hauptluftleitelements 14 mit ausführen.

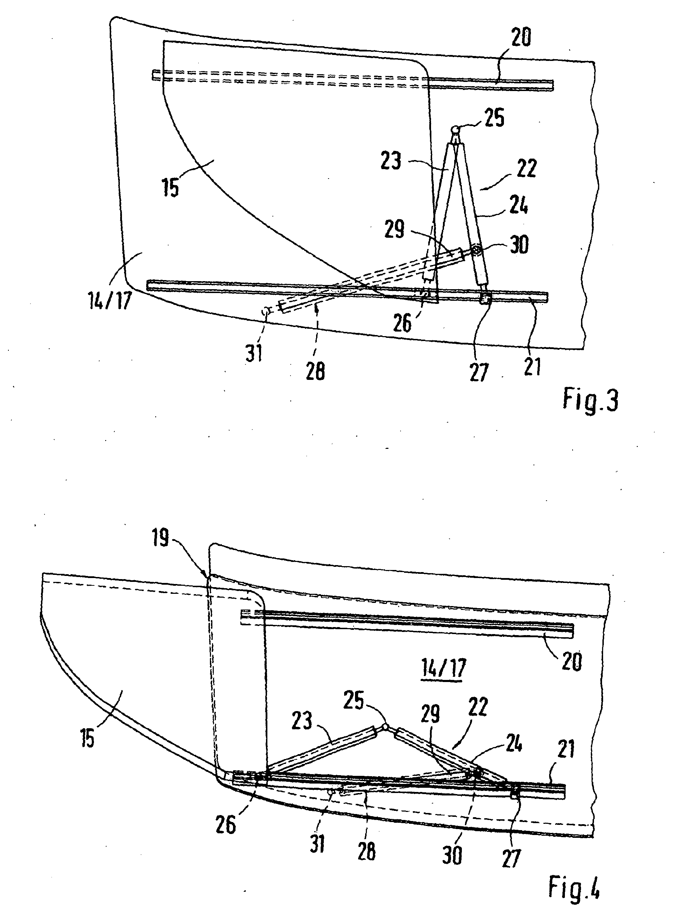

Im gezeigten, bevorzugten Ausführungsbeispiel der Erfindung sind die seitlichen Zusatzluftleitelemente 15 und 16 zeitgleich bzw. simultan mit der schwenkartigen Verlagerung des mittleren Hauptluftleitelements 14 von der Ruhestellung (siehe Fig. 1) in die Betriebsstellung (siehe Fig. 2) gegenüber dem mittleren Hauptluftleitelement von einer ebenfalls eingefahrenen Ruhestellung in eine ebenfalls ausgefahrene Betriebsstellung überführbar, wobei hierbei die Zusatzluftleitelemente 15 und 16 gegenüber dem Hauptluftleitelement 14 ausschließlich linear bzw. translatorisch in einer Richtung quer zur Längsrichtung des Fahrzeugs verstellbar sind. Auf diese gekoppelte Verstellung von Hauptluftleitelement 14 und Zusatzluftleitelementen 15 und 16 wird nachfolgend unter Bezugnahme auf Fig. 3 bis 6 in größerem Detail eingegangen.

So zeigen Fig. 3 bis 6 eines der beiden seitlichen Zusatzluftleitelemente 15, welches auf einem Trägerelement 17 des mittleren Hauptluftleitelements 14 gelagert ist. In der Ruhestellung (siehe Fig. 1, 3, 5) ist das seitliche Zusatzluftleitelement 15 von einem in Fig. 3 bis 6 nicht-dargestellten Abdeckelement 18 verdeckt, so dass das seitliche Zusatzluftleitelement 15 in der Ruhestellung der Luftleitvorrichtung 13 nicht sichtbar ist. Neben dem Zusatzluftleitelement 15 und dem Trägerelement 17 des Hauptluftleitelements 14 ist in Fig. 2, 4 bis 6 weiterhin eine versenkte Aufnahme 19 des Karosserieteils 12 des Heckereichs 10 gezeigt, wobei die erfindungsgemäße Luftleitvorrichtung 13 in Ruhestellung in der versenkten Aufnahme 19 derart aufgenommen ist, dass das Abdeckelement 18 die Luftleitvorrichtung 13 oberflächenbündig in den Formverlauf des Heckbereichs 10 integriert.

Gemäß Fig. 3 bis 6 ist das dort gezeigte, seitliche Zusatzluftleitelement 15 in einer von zwei Führungsschienen 20, 21 gebildeten Führungseinrichtung geführt, wobei die Führungsschienen 20 und 21 auf dem Trägerelement 17 des Hauptluftleitelements 14 montiert sind, und wobei sich die Führungsschienen 20 und 21 quer zur Längsrichtung des Fahrzeugs, nämlich in etwa senkrecht zur Längsrichtung des Fahrzeugs, erstrecken. Das Zusatzluftleitelement 15 ist an den Führungsschienen 20, 21 gelagert und entlang derselben linear bzw. translatorisch verfahrbar. Die Führungsscheinen können auch gekrümmt sein, um der linearen Verschiebung quer zur Längsrichtung des Kraftfahrzeugs eine zusätzliche Bewegungskomponente zu überlagern. Weiterhin können die Führungsscheinen auch durch eine Kulissenführung ersetzt werden.

Zum linearen Verschieben bzw. Verfahren des in Fig. 3 bis 6 dargestellten Zuatzluftleitelements 15 gegenüber dem Hauptluftleitelement 14 ist dem Zusatzluftleitelement 17 eine Betätigungseinrichtung 22 zugeordnet, die im gezeigten Ausführungsbeispiel von zwei Betätigungselementen 23 und 24 gebildet ist.

Die Betätigungselemente 23 und 24 werden nachfolgend als Betätigungstangen bezeichnet. Die Betätigungselemente 23 und 24 können auch als Betätigungslenker bezeichnet werden.

Benachbarte Enden der beiden Betätigungsstangen 23 und 24 sind über ein Gelenk 25 gelenkig miteinander verbunden. Eine erste Gelenkstange 23 ist weiterhin an einem dem Gelenk 25 gegenüberliegenden Ende über ein Gelenk 26 mit dem seitlichen Zusatzluftleitelement 25 verbunden, wohingegen eine zweite Gelenkstange 24 mit einem dem Gelenk 25 gegenüberliegenden Ende über ein Gelenk 27 mit dem mittleren Hauptluftleitelement 14 gelenkig verbunden, insbesondere mit der auf dem Trägerelement 17 des mittleren Hauptluftleitelements 14 angeordneten Führungsschiene 21 des Führungselements.

Einem Vergleich der Fig. 3 bis 6 kann entnommen werden, dass das Gelenk 27 in der Ruhestellung und in der Betriebsstellung des seitlichen Zusatzluftleitelements 15 jeweils an derselben Position angeordnet und damit ortsfest ausgeführt ist.

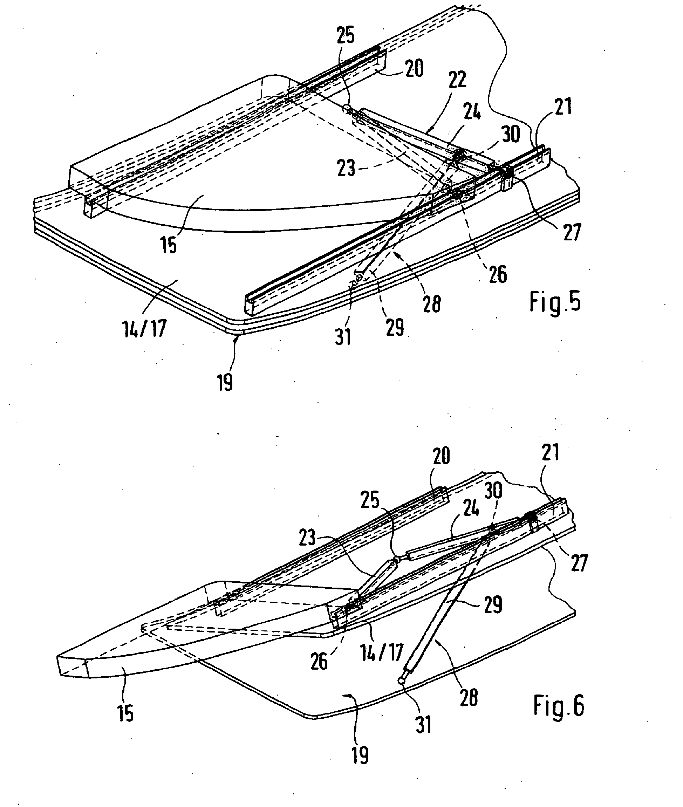

Die Gelenke 25 und 26 verändern hingegen bei der Überführung des seitlichen Zusatzluftleitelements 15 von der Ruhestellung (siehe Fig. 3 und 5) in die Betriebsstellung (siehe Fig. 4 und 6) ihre Position relativ zur Führungsschiene 21.

Zur Kopplung der Linearbewegung des in Fig. 3 bis 6 gezeigten, seitlichen Zusatzluftleitelements 15 gegenüber dem mittleren Hauptluftleitelement 14 mit der Verlagerung des mittleren Hauptluftleitelements 14 von der Ruhestellung in die Betriebsstellung bzw. von der Betriebsstellung in die Ruhestellung greift an der Betätigungseinrichtung 22 des seitlichen Zusatzluftleitelements 15 eine Kopplungseinrichtung 28 an, die im gezeigten Ausführungsbeispiel von einem Kopplungselement 29 gebildet ist.

Das Kopplungselement 29 wird nachfolgend als Kopplungsstange bezeichnet. Das Kopplungselement 29 kann auch als Kopplungslenker bezeichnet werden.

Die Kopplungsstange 29 greift mit einem ersten Ende über ein Gelenk 30 an einer der beiden Betätigungsstangen 23 bzw. 24 und mit einem gegenüberliegenden zweiten Ende über ein Gelenk 31 an der Aufnahme 19 des Karosserieteils 12 des Heckbereichs 10 an. Dann, wenn das Hauptluftleitelement 14 aus der in Fig. 3 und 5 gezeigten Ruhestellung in die in Fig. 4 und 6 gezeigte Betriebsstellung durch Verschwenken verlagert wird, überträgt die Kopplungsstange 29 diese Bewegung auf die Betätigungseinrichtung 22 und damit auf das Zusatzluftleitelement 15, um dasselbe simultan bzw. gleichzeitig zur Verlagerung des Hauptluftleitelements 14 und damit gekoppelt an die Verlagerung des Hauptluftleitelements 14 linear bzw. translatorisch in Richtung der Führungsschienen 20 und 21 und damit quer zur Längsrichtung des Fahrzeugs gegenüber dem Hauptluftleitelement 14 zu verschieben.

Die Betätigungsstangen bzw. Gelenkstangen 23, 24 stellen eine Übersetzung bereit, die erforderlich ist, um den Weg zum Ausfahren der Zusatzluftleitelemente 15, 16 aus der Drehbewegung bzw. Schwenkbewegung des Hauptluftleitelements 14 zu generieren. Ist der Verstellung des Hauptluftleitelements 14 gegenüber der Aufnahme 19 groß genug, so können die Betätigungsstangen bzw. Gelenkstangen 23, 24 entfallen und die Kopplungsstangen 29 können über die Gelenke 30 direkt an die Zusatzluftleitelemente 15 und 16 angebunden sein.

Wie bereits erwähnt, sind im gezeigten Ausführungsbeispiel die seitlichen Zusatzluftleitelemente 15 und 16 in der Ruhestellung vom mittleren Hauptluftleitelement 14 verdeckt und demnach nicht sichtbar. Alternativ ist es auch möglich, dass die Zusatzluftleitelemente 15 und 16 in der Ruhestellung sichtbar sind, wobei dann dieselben oberhalb eines Abdeckelements 18 des Hauptluftleitelements 14 angeordnet sind.

Im gezeigten Ausführungsbeispiel wird die Kopplung zwischen der Verlagerung des Hauptluftleitelements 14 und der Verschiebung der Zusatzluftleitelemente 15 und 16 mechanisch über die Kopplungseinrichtung 28 realisiert. In diesem Fall ist dann lediglich ein einziger Antrieb für die Luftleitvorrichtung 13 erforderlich.

Weiterhin sei darauf hingewiesen, dass die Betätigungseinrichtung 22 zur linearen Verschiebung der Zusatzluftleitelemente 15 und 16 gegenüber dem Hauptluftleitelement 14 im Unterschied zum gezeigten Ausführungsbeispiel auch über einen Scherenmechanismus bereitgestellt werden kann.

## Patentansprüche

1. Luftleitvorrichtung (13) für ein Fahrzeug, insbesondere für ein Personenkraftfahrzeug, die in einem Heckbereich (10) des Fahrzeugsanordenbar ist und mindestens ein mittleres Hauptluftleitelement (14) umfasst, welches von einer eingefahrenen Ruhestellung in eine ausgefahrene Betriebsstellung verlagerbar ist, wobei seitliche Zusatzluftleitelemente (15, 16) zusammen mit dem oder jedem Hauptluftleitelement verlagerbar und gegenüber dem oder jedem Hauptluftleitelement (14) im wesentlichen linear bzw. translatorisch in einer Richtung quer zur Längsrichtung des Fahrzeugs verstellbar sind, um dieselben von einer ebenfalls eingefahrenen Ruhestellung in eine ebenfalls ausgefahrene Betriebsstellung zu überführen, wobei jedes Zusatzluftleitelement (15, 16) in einer Führungseinrichtung (20, 21) geführt und entlang derselben verfahrbar ist, und wobei die Zusatzluftleitelemente (15, 16) zeitgleich bzw. simultan mit der Verlagerung des oder jedes Hauptluftleitelements (14) von der ebenfalls eingefahrenen Ruhestellung in die ebenfalls ausgefahrene Betriebsstellung derart überführbar sind, **dadurch gekennzeichnet, dass** hierzu an der Betätigungseinrichtung (22) eine Kopplungseinrichtung (28) angreift, welche die lineare Verstellung der seitlichen Zusatzluftleitelemente (15, 16) gegenüber dem mittleren Hauptluftleitelement (14) an die Verlagerung des mittleren Hauptluftleitelements (14) mechanisch koppelt.

2. Luftleitvorrichtung nach Anspruch 1, **dadurch gekennzeichnet, dass** die jeweilige Führungseinrichtung (20, 21) quer, insbesondere in etwa senkrecht, zur Längsrichtung des Fahrzeugs verläuft.

3. Luftleitvorrichtung nach Anspruch 1, **dadurch gekennzeichnet, dass** die jeweilige Führungseinrichtung quer zur Längsrichtung des Fahrzeugs verläuft und gekrümmt ist.

4. Luftleitvorrichtung nach einem oder mehreren der Ansprüche 1 bis 3, **dadurch gekennzeichnet, dass** die jeweilige Führungseinrichtung (20, 21) mit dem mittleren Hauptluftleitelement (14) fest verbunden ist.

5. Luftleitvorrichtung nach einem oder mehreren der Ansprüche 1 bis 4, **dadurch gekennzeichnet, dass** jedem Zusatzluftleitelement (15, 16) zur linearen Verschiebung desselben gegenüber dem Hauptluftleitelement (14) eine Betätigungseinrichtung (22) zugeordnet ist.

6. Luftleitvorrichtung nach Anspruch 5, **dadurch gekennzeichnet, dass** die Betätigungseinrichtung (22) mindestens zwei gelenkig untereinander verbundene Betätigungselemente aufweist.

7. Luftleitvorrichtung nach Anspruch 6, **dadurch gekennzeichnet, dass** ein erstes Betätigungselement (23) mit dem jeweiligen Zusatzluftleitelement (15, 16) gelenkig verbunden ist, und dass ein zweites Betätigungselement (24) mit dem Hauptluftleitelement (14) oder mit der Führungseinrichtung (21, 22), an welcher das jeweilige Zusatzluftleitelement (15, 16) gelagert ist, gelenkig verbunden ist.

8. Luftleitvorrichtung nach Anspruch 1, **dadurch gekennzeichnet, dass** die Kopplungseinrichtung (28) ein Kopplungselement (29) aufweist, das einerseits mit einem Betätigungselement (24) der Betätigungseinrichtung (22) und andererseits mit einem Karosserieteil (12) gelenkig verbunden ist.

9. Luftleitvorrichtung nach einem oder mehreren der Ansprüche 1 bis 8, **dadurch gekennzeichnet, dass** die Zusatzluftleitelemente (15, 16) entweder in Ruhestellung des Hauptluftleitelements (14) unterhalb desselben angeordnet und nicht sichtbar oder in Ruhestellung des Hauptluftleitelements oberhalb desselben angeordnet und sichtbar sind.

## Claims

1. Aerodynamic spoiler (13) for a vehicle, in particular for a passenger motor vehicle, which aerodynamic spoiler can be arranged in a rear region (10) of the vehicle and comprises at least one central main air-guiding element (14) which can be shifted from a retracted inoperative position into an extended operative position, wherein lateral additional air-guiding elements (15, 16) can be shifted together with the or each main air-guiding element and can be adjusted in a substantially linear or translatory manner in relation to the or each main air-guiding element (14) in a direction transversely with respect to the longitudinal direction of the vehicle in order to be transferred from a likewise retracted inoperative position into a likewise extended operative position, wherein each additional air-guiding element (15, 16) is guided in a guide device (20, 21) and is movable along the same, and wherein the additional air-guiding elements (15, 16) can be transferred synchronously or simultaneously with the shifting of the or each main air-guiding element (14) from the likewise retracted inoperative position into the likewise extended operative position, **characterized in that**, for this purpose, a coupling device (28) acts on the actuating device (22), said coupling device mechanically coupling the linear adjustment of the lateral additional air-guiding elements (15, 16) in relation to the central main air-guiding element (14) to the shifting of the central main air-guiding element (14).

2. Aerodynamic spoiler according to Claim 1, **characterized in that** the respective guide device (20, 21) runs transversely, in particular approximately perpendicularly, with respect to the longitudinal direction of the vehicle.

3. Aerodynamic spoiler according to Claim 1, **characterized in that** the respective guide device runs transversely with respect to the longitudinal direction of the vehicle and is curved.

4. Aerodynamic spoiler according to one or more of Claims 1 to 3, **characterized in that** the respective guide device (20, 21) is connected fixedly to the central main air-guiding element (14).

5. Aerodynamic spoiler according to one or more of Claims 1 to 4, **characterized in that** an actuating device (22) is assigned to each additional air-guiding element (15, 16) for the linear displacement of the same in relation to the main air-guiding element (14).

6. Aerodynamic spoiler according to Claim 5, **characterized in that** the actuating device (22) has at least two actuating elements connected to each other in an articulated manner.

7. Aerodynamic spoiler according to Claim 6, **characterized in that** a first actuating element (23) is connected in an articulated manner to the respective additional air-guiding element (15, 16), and **in that** a second actuating element (24) is connected in an articulated manner to the main air-guiding element (14) or to the guide device (21, 22) on which the respective additional air-guiding element (15, 16) is mounted.

8. Aerodynamic spoiler according to Claim 1, **characterized in that** the coupling device (28) has a coupling element (29) which is connected in an articulated manner at one end to an actuating element (24) of the actuating device (22) and at the other end to a body part (12).

9. Aerodynamic spoiler according to one or more of Claims 1 to 8, **characterized in that** the additional air-guiding elements (15, 16) are either arranged below the main air-guiding element (14), in the inoperative position of the same, and are not visible, or are arranged above the main air-guiding element, in the inoperative position of the same, and are visible.

## Revendications

1. Déflecteur aérodynamique (13) pour un véhicule, en particulier une voiture automobile particulière, qui peut être disposé dans une région arrière (10) du véhicule et qui comprend au moins un élément de déflexion principal central (14), qui peut être déplacé d'une position de repos rentrée à une position active sortie, dans lequel des éléments de déflexion supplémentaires latéraux (15, 16) peuvent être déplacés en même temps que le ou que chaque élément de déflexion principal et sont réglables, par rapport au ou à chaque élément de déflexion principal (14), de façon essentiellement linéaire ou en translation dans une direction transversale à la direction longitudinale du véhicule, pour amener ceux-ci d'une position de repos également rentrée à une position active également sortie, dans lequel chaque élément de déflexion supplémentaire (15, 16) est guidé dans un dispositif de guidage (20, 21) et est déplaçable le long de celui-ci, et dans lequel les éléments de déflexion supplémentaires (15, 16) peuvent être amenés en même temps ou simultanément au déplacement du ou de chaque élément de déflexion principal (14) de la position de repos également rentrée à la position active également sortie, **caractérisé en ce qu'**un dispositif de couplage (28) est à cet effet attaché au dispositif d'actionnement (22), et couple mécaniquement le déplacement linéaire des éléments de déflexion supplémentaires latéraux (15, 16) par rapport à l'élément de déflexion principal central (14) au déplacement de l'élément de déflexion principal central (14).

2. Déflecteur aérodynamique selon la revendication 1, **caractérisé en ce que** le dispositif de guidage respectif (20, 21) est placé transversalement, en particulier à peu près perpendiculairement, à la direction longitudinale du véhicule.

3. Déflecteur aérodynamique selon la revendication 1, **caractérisé en ce que** le dispositif de guidage respectif est placé transversalement à la direction longitudinale du véhicule et est courbe.

4. Déflecteur aérodynamique selon une ou plusieurs des revendications 1 à 3, **caractérisé en ce que** le dispositif de guidage respectif (20, 21) est solidaire de l'élément de déflexion principal central (14).

5. Déflecteur aérodynamique selon une ou plusieurs des revendications 1 à 4, **caractérisé en ce qu'**un dispositif d'actionnement (22) est associé à chaque élément de déflexion supplémentaire (15, 16) pour le déplacement linéaire de celui-ci par rapport à l'élément de déflexion principal (14).

6. Déflecteur aérodynamique selon la revendication 5, **caractérisé en ce que** le dispositif d'actionnement (22) comprend au moins deux éléments d'actionnement reliés l'un à l'autre de manière articulée.

7. Déflecteur aérodynamique selon la revendication 6, **caractérisé en ce qu'**un premier élément d'actionnement (23) est relié à l'élément de déflexion supplémentaire respectif (15, 16) de manière articulée et **en ce qu'**un deuxième élément d'actionnement (24) est relié de manière articulée à l'élément de déflexion principal (14) ou au dispositif de guidage (21, 22) sur lequel l'élément de déflexion supplémentaire respectif (15, 16) est monté.

8. Déflecteur aérodynamique selon la revendication 1, **caractérisé en ce que** le dispositif de couplage (28) comprend un élément de couplage (29), qui est relié de manière articulée d'une part à un élément d'actionnement (24) du dispositif d'actionnement (22) et d'autre part à une partie de carrosserie (12).

9. Déflecteur aérodynamique selon une ou plusieurs des revendications 1 à 8, **caractérisé en ce que** les éléments de déflexion supplémentaires (15, 16) sont disposés soit en dessous de l'élément de déflexion principal (14) dans la position de repos de celui-ci et ne sont pas visibles soit au-dessus de l'élément de déflexion principal dans la position de repos de celui-ci et sont visibles.
